# EUROPÄISCHE PATENTSCHRIFT

(11) **EP 2 905 695 B1**
(45) Veröffentlichungstag und Bekanntmachung des Hinweises auf die Patenterteilung: **27.12.2017**
(21) Anmeldenummer: 14154521.0
(22) Anmeldetag: 10.02.2014
(51) Int. Cl.: G06F 3/12, H04N 1/32

(54) **VERFAHREN UND VORRICHTUNG ZUR BEARBEITUNG VON POST-SCRIPT-DATEIEN**
METHOD AND DEVICE FOR PROCESSING OF POST SCRIPT FILES
PROCÉDÉ ET DISPOSITIF DE TRAITEMENT DE FICHIERS POST-SCRIPT

(43) Veröffentlichungstag der Anmeldung: 12.08.2015
(73) Patentinhaber: Docuform GmbH, 76185 Karlsruhe (DE)
(72) Erfinder: Denk, Martin, 78464 Konstanz (DE)
(74) Vertreter: Geitz Truckenmüller Lucht Christ

(56) Entgegenhaltungen:
- EP-A1- 2 535 800
- EP-A2- 1 229 724

## Beschreibung

Die Erfindung betrifft ein Verfahren und eine Vorrichtung zur Bearbeitung von Post-Script-Dateien, PS-Dateien, in einem Netzwerk mit einem zentralen Server, mehreren Arbeitsplatzrechnern und mehreren Post-Script-fähigen Netzwerkclients, PS-Clients, wobei die Geräteeigenschaften der PS-Clients, insbesondere betreffend, die Gerätefunktionen und Anschlussdaten des PS-Clients, mittels des zentralen Servers über ein Geräteprotokoll, insbesondere dass SNMP-Protokoll, kontinuierlich abgefragt und in einer zentralen Gerätedatenbank abgelegt werden, wobei, sobald ein Anwender mittels eines Arbeitsplatzrechners eine geräteunspezifische PS-Datei erzeugt hat, diesem Anwender auf Anfrage oder selbsttätig vom Server unter Berücksichtigung der in der Gerätedatenbank abgelegten Geräteeigenschaften, umfassend die Gerätefunktionen und Anschlussdaten, der im Netzwerk aktuell befindlichen PS-Clients zur Auswahl angeboten werden und der Anwender im Weiteren in Abhängigkeit hiervon seinen Verarbeitungswunsch, wenigstens umfassend das ausgewählte Gerät, dessen Gerätefunktionen und Anschlussdaten definiert.

Ein solches Druckverfahren und eine solche Druckvorrichtung sind aus der europäischen Patentanmeldung EP 2 535 800 A1 vorbekannt. Der Vorteil des vorbekannten Verfahrens besteht darin, dass im Unterschied zum Stand der Technik nicht dezentral an den im Netzwerk angeschlossenen Arbeitsplatzrechnern die zur Abarbeitung eines Druckauftrages mittels der im Netzwerk befindlichen Drucker erforderlichen Druckertreiber vorgehalten und im Falle eines Wechsels der Drucker regelmäßig aktualisiert werden müssen. Zwar ist es aus dem Stand der Technik bekannt, in einem Netzwerk zentrale Datenbanken mit den Druckertreiber-Daten zu diesem Zweck vorzuhalten. Die vorstehend bezeichnete europäische Patentanmeldung bildet diesen Stand jedoch dahingehend weiter, dass in einer zentralen Gerätedatenbank selbsttätig jeweils die aktuellen Daten vorgehalten werden, weil über den zentralen Server ständig über das an sich bekannte SNMP-Geräteprotokoll die im Netzwerk befindlichen PS-Clients abfragt und für den Fall, dass im Rahmen dieser Abfrage Veränderungen festgestellt werden, die in der zentralen Gerätedatenbank abgelegten Daten selbsttätig aktualisiert werden. Hierdurch ist zunächst sichergestellt, dass der Anwender seine Auswahl eines PS-Clients unter Berücksichtigung der in Echtzeit zur Verfügung gestellten jeweils aktuellen Gerätedaten vornehmen kann. Darüber hinaus kann die zentrale Gerätedatenbank selbsttätig gepflegt werden, so dass insoweit die ansonsten üblichen und vergleichsweise aufwändigen Tätigkeiten eines erfahrenen Administrators zur Aktualisierung der zentral oder dezentral vorgehaltenen Druckertreiber entfallen kann.

Ferner ist ein ähnliches Verfahren aus der EP 1 229 724 A2 vorbekannt und betrifft ein interaktives Druckverfahren mit einer Mehrzahl von Druckgeräten.

Ausgehend von diesem Stand der Technik liegt der Erfindung die Aufgabe zu Grunde, dass aus der EP 2 535 800 A1 vorbekannte Drucksystem im Sinne eines weiter verbesserten Bedienkomforts weiterzubilden. Die Lösung dieser Aufgabe gelingt durch ein Verfahren gemäß Anspruch 1 sowie durch eine Vorrichtung gemäß Anspruch 11. Vorteilhafte Ausgestaltungen des erfindungsgemäßen Verfahrens können den abhängigen Ansprüchen 2 bis 10 und 12 entnommen werden.

Gemäß dem geltenden Anspruch 1 wird der Verarbeitungswunsch des Anwenders der vom Anwender mittels eines Arbeitsplatz erzeugten PS-Datei als Zusatzinformation, etwa im Header der PS-Datei, beigefügt, wobei allerdings die PS-Datei als solche weiterhin als geräteunspezifische PS-Datei vorgehalten wird. Zusätzlich sieht das erfindungsgemäße Verfahren vor, dass , zusätzlich die Post-Script-Printer-Description, die PPD-Information eines jeden PS-Clients in dem Netzwerk und/oder beliebiger PS-Clients, vornehmlich aller denkbaren PS-Clients, außerhalb des Netzwerks in einem vorbereitenden Schritt ausgewertet und dabei aus dieser PPD-Information mittels eines Interpreters die Steuerungssequenzen und Anschlussdaten eines jeden PS-Clients innerhalb des Netzwerks extrahiert und in einem weiteren Verarbeitungsschritt mittels eines Konverters in eine gerätespezifische intelligente XML-Steuerungsdatei transformiert werden und diese XML-Steuerungsdateien in einer zentralen XML-Steuerungsdatenbank auf dem Server abgelegt und vorgehalten werden. Gemäß dem erfindungsgemäßen Verfahren werden erst unmittelbar vor der Endverarbeitung der immer noch geräteunspezifischen PS-Datei anhand der den Verarbeitungswunsch des Anwenders betreffenden Zusatzinformation aus der XML-Steuerungsdatenbank die, dem ausgewählten PS-Client entsprechende XML-Steuerungsdatei bezogen und in einem weiteren Arbeitsschritt die geräteunspezifische PS-Datei unter Verwendung dieser XML-Steuerungsdatei in eine gerätespezifische PS-Datei transformiert und der Endverarbeitung durch den ausgewählten PS-Client, also vorzugsweise einem Ausdruck durch den ausgewählten Drucker, zugeführt.

Der Vorteil des erfindungsgemäßen Verfahrens besteht also in erster Linie darin, dass bis unmittelbar vor Ausführung des Druckauftrages in dem Netzwerk eine geräteunspezifische PS-Datei vorgehalten wird, so dass bis zuletzt veränderte Bearbeitungswünsche des Anwenders, gegebenenfalls eine veränderte Situation der im Netzwerk befindlichen PS-Clients, etwa von deren Anschlussdaten berücksichtigt werden kann und die jeweils zur Umsetzung des Verarbeitungswunsches benötigten Steuerungssequenzen in Echtzeit bezogen und somit die Umsetzung des Verarbeitungswunsches des Anwenders auch bei einer veränderten Gerätesituation jederzeit garantiert ist. Dadurch, dass in dem Netzwerk bis kurz vor der Endverarbeitung der vom Anwender erzeugten PS-Datei eine geräteunspezifische PS-Datei vorgehalten wird, sind auch sämtliche Voraussetzungen für ein "Follow-to-print"-Verfahren gegeben.

Im Rahmen des erfindungsgemäßen Verfahrens muss zu jedem im Netzwerk befindlichen PS-Client einmal die erwähnte angelegte XML-Steuerungsdatei erzeugt und der XML-Datenbank angelegt werden. Von dann an ist das Verfahren arbeitsfähig. Eine weitere Druckerverwaltung oder -administration ist zumindest weitgehend nicht mehr erforderlich.

In vorteilhafter Weiterbildung der Erfindung ist die die Netzwerk eingesetzte XML-Steuerungsdatenbank nicht als Stand-Alone-Lösung angelegt, sondern steht mit einer zentralen Master-XML-Steuerungsdatenbank in Datenverbindung. In dieser Ausführung ist das Verfahren selbstlernend. Das heißt wenn irgendwo in einem Netzwerk eine neue XML-Steuerungsdatei zu einem bisher nicht angelegten PS-Client eingestellt wird, so wird diese an die Master-XML-Steuerungsdatenbank übertragen und steht im Wege des Abgleichs der angeschlossenen XML-Steuerungsdatenbanken anschließend allen mit dieser Datenbank verbundenen Netzwerken zur Verfügung. Dies bedeutet, dass egal welcher neue PS-Client auch in dem Netzwerk neu installiert wird, dieser - jedenfalls von exotischen Ausnahmen abgesehen - sofort betriebsbereit ist und von den im Netzwerk befindlichen Arbeitsplatzrechnern angesteuert werden kann. Auch in den Fällen in denen dies nicht möglich ist, ist aber sichergestellt, dass ein Ausdruck der PS-Datei erfolgt, weil die PS-Clients in auch die geräteunspezifische PS-Datei in jedem Fall verarbeiten können. Es ist in diesem Fall lediglich nicht sicher, dass der Ausdruck auch in der bestmöglichen Qualität erfolgt.

Falls der Anwender in Verbindung mit der Definition seines Verarbeitungswunsches anhand der ihm in Echtzeit angebotenen Geräteeigenschaften der PS-Clients auch angibt, dass die Umsetzung der von ihm erzeugten PS-Datei unter Verwendung des "Follow-to-Print"-Verfahrens erfolgen soll, wird auch diese Information als weitere Zusatzinformation dem Verarbeitungswunsch der geräteunspezifischen PS-Datei beigefügt.

In konkreter Ausgestaltung der Erfindung wird in Abhängigkeit von der den geräteunspezifischen PS-Datei beigefügten Verarbeitungswunsch die dem vom Anwender ausgewählten PS-Client entsprechende XML-Steuerungsdatei in der XML-Steuerungsdatenbank adressiert, die die zur Ausführung des Verarbeitungswunsches des Anwenders benötigten Steuerungssequenzen enthält, und diese gerätespezifische XML-Steuerungsdatei im Netzwerk bereitgestellt. Hiermit stehen im Netzwerk alle zur Endverarbeitung der vom Anwender erzeugten geräteunspezifischen PS-Datei benötigten Informationen zur Verfügung. Die Überführung in eine gerätespezifische PS-Datei mit Hilfe der dem Verarbeitungswunsch des Anwenders entsprechenden XML-Steuerungsdatei erfolgt dann, wie bereits ausgeführt wurde, erst unmittelbar vor Ausführung der Endverarbeitung also insbesondere des Ausdrucks der dann gerätespezifischen PS-Datei.

Außerdem ist sichergestellt, dass entweder auf Wunsch des Anwenders oder aufgrund von einer in dem Netzwerk angelegten Routine unmittelbar vor der Endverarbeitung der PS-Datei im Rahmen einer erneuten Abfrage überprüft wird, ob der vom Anwender ausgewählte PS-Client noch im Netzwerk vorhanden ist und wenn ja, ob er noch dieselben Anschlussdaten besitzt, also noch am selben Anschluss angeschlossen ist. Nur für den Fall, dass beide im Netzwerk angelegten Rückfragen mit ja beantwortet werden, erfolgt dann die Umsetzung des Verarbeitungswunsches des Anwenders mithilfe der im Netzwerk bereitgestellten XML-Steuerungsdatei. wobei die geräteunspezifische PS-Datei in eine gerätespezifische PS-Datei überführt wird und dem ausgewählten PS-Client zur Endverarbeitung übermittelt, d.h. insbesondere ausgedruckt, wird.

Der Vorteil des erfindungsgemäßen Verfahrens wird insbesondere dann deutlich, wenn die vorstehend erwähnte erste im System angelegte Abfrage ergibt, dass an dem vom Anwender ausgewählten Anschluss inzwischen ein anderer PS-Client angeschlossen ist. Das erfindungsgemäße Verfahren sieht in diesem Fall vor, dass dann vom Server die dem veränderten PS-Client entsprechende XML-Steuerungsdatei in der XML-Steuerungsdatenbank adressiert und die dem Verarbeitungswunsch des Anwenders entsprechende XML-Steuerungsdatei extrahiert und als neue XML-Steuerungsdatei bereitgestellt wird und erst dann die geräteunspezifische PS-Datei in eine gerätespezifische PS-Datei überführt und mittels des neuen PS-Clients abgearbeitet, insbesondere ausgedruckt, wird. Durch das erfindungsgemäße Verfahren ist also sichergestellt, dass selbst im Falle eines Geräteaustauschs der vom Anwender ursprünglich gewünschte Ausdruck an dem ausgewählten Anschlussort in jedem Fall sichergestellt ist.

In weiterer Ausgestaltung des Verfahrens wird darüber hinaus sichergestellt, dass die für den Fall eines Wechsels des PS-Clients an dem vom Anwender ausgewählten Anschlussort die dann neu zu erstellende XML-Steuerungsdatei nach dem "Best-Mode"-Prinzip erstellt wird, d.h., dass der Verarbeitungswunsch des Anwenders jeweils bestmöglichst durch den an dem angewählten Anschlussort vorhanden PS-Client ausgeführt wird. Dies bedeutet, dass wenn beispielsweise der Anwender einen Farbdruck ausgewählt hat, und der ursprünglich ausgewählte PS-Client insoweit nur einen 4-Farbendruck anbieten konnte, aber der nunmehr an dem Anschlussort vorhandene PS-Client einen 64-Farbendruck bereitstellt, mittels der neuen bereitgestellten XML-Steuerungsdatei sichergestellt wird, dass dann der Farbdruck im 64-Farbendruck ausgeführt wird mithin also das jeweils mit dem an dem Anschlussort vorgefundenen PS-Client optimale Bearbeitungsergebnis erzeugt wird. Für den Fall, dass der an dem ausgewählten Anschlussort mittlerweile angeschlossene PS-Client nicht farbdruckfähig ist, so wird dann eine XML-Steuerungsdatei bereitgestellt, die dann eben im Schwarzweißdruck die Realisierung des vom Anwender erteilten Druckauftrages sicherstellt, weil dann eben diese Lösung die bestmögliche Umsetzung des erteilten Druckauftrages darstellt. Im Ergebnis stellt das erfindungsgemäße Verfahren also sicher, dass der Verarbeitungswunsch des Anwenders auch im Falle einer veränderten Situation der im Netzwerk befindlichen PS-Clients jeweils bestmöglich abgearbeitet wird. Diese Lösung ist den aus dem Stand der Technik vorbekannten Verfahren überlegen, die nach dem sogenannten "Best-Fit-Verfahren" arbeiten, wobei der Ausdruck auf einen anderen Gerät im Sinne der Auswahl des größten gemeinsamen Nenners der beteiligten Geräte erfolgt. Hierdurch wird zwar ein verbessertes, aber nicht im Hinblick auf den eingesetzten Drucker optimales Ergebnis erzielt.

In abermals vorteilhafter Ausgestaltung des Verfahrens, kann die Abfrage, ob ein vom Anwender im Rahmen seines Verarbeitungswunsch ausgewählter PS-Client an dem ausgewählten Anschluss im Netzwerk vorhanden ist auch das Ergebnis erbringen, dass der ausgewählte PS-Client zwar nicht mehr an dem ausgewählten Anschluss aber an einem anderen Anschluss im Netzwerk vorhanden ist. In diesem Fall wird dem Anwender, der ursprünglich ausgewählte PS-Client zur erneuten Auswahl mit den aktualisierten Anschlussdaten angeboten und für den Fall, dass der Anwender diesen PS-Client auswählt, aus der Gerätedatenbank die Datenbank veränderten Anschlussdaten bezogen und als veränderte Zusatzinformation der PS-Datei angefügt werden. Aufgrund des unveränderten PS-Clients bleibt die korrespondierende XML-Steuerungsdatei unverändert. , Auch an dieser Stelle werden die durch das erfindungsgemäße Verfahren erzielten Vorteile deutlich, indem nämlich die vom Anwender erzeugte geräteunspezifische PS-Datei erst unmittelbar vor Ausführung des Druckauftrages in eine gerätespezifische PS-Datei überführt wird und somit beispielsweise auch Anschlusswechsel des vom Anwender ausgewählten Gerätes im Rahmen des erfindungsgemäßen Verfahrens vergleichsweise unproblematisch berücksichtigt werden können.

Wie bereits erwähnt, ist das erfindungsgemäße Verfahren auch ideal geeignet, dass aus Gründen des Bedienkomforts aber auch des Datenschutzes immer mehr innerhalb von Netzwerken eingesetzte "Follow-to-print"-Verfahren umzusetzen. Unter einem "Follow-to-print"-Verfahren wird hier ein Verfahren verstanden, bei dem der Anwender zunächst eine PS-Datei mittels seines Arbeitsplatzrechners erzeugt, in einem weiteren Schritt dann seinen vorstehend definierten Verarbeitungswunsch dem System mitteilt, und zusätzlich in Verbindung mit dem Verarbeitungswunsch auch übermittelt, dass die Abarbeitung des Druckauftrages nach dem "Follow-to-print"-Verfahren erfolgen soll. Selbstverständlich kann auch auf Administratorebene voreingestellt sein, dass sämtliche Verarbeitungen von PS-Dateien in dem Netzwerk nur mittels des "Follow-to-print"-Verfahrens ausgeführt werden. Im Falle einer solchen Vorkonfektionierung des Netzwerks entfällt die entsprechende Auswahl des Anwenders.

Für den Fall, dass auf dem einen oder anderen Weg das "Follow-to-print"-Verfahren ausgewählt ist, erfolgt die Endverarbeitung der von dem Anwender erzeugten PS-Datei erst nach Abruf der Endverarbeitung durch den Anwender,, die bestimmungsgemäß unmittelbar an dem von dem Anwender im Rahmen seines Verarbeitungswunsches ausgewählten PS-Client erfolgen kann oder aber auch an einem beliebigen anderen PS-Client in dem Netzwerk.

Zum Abruf der Endverarbeitung legitimiert sich der Anwender an dem jeweiligen PS-Client in der erforderlichen Weise. Die Legitimation kann beispielsweise durch einen Fingerscan, eine Legitimationskarte oder durch die Eingabe eines Passwortes oder vergleichbare Legitimationsverfahren erfolgen.

Sobald der Anwender durch seine Legitimation die Endverarbeitung seiner PS-Datei gestartet hat, wird dann, wie vorstehend bereits beschrieben, aus der zentralen XML-Steuerungsdatenbank die zur Umsetzung des Verarbeitungswunsches, an dem jeweiligen PS-Client benötigte XML-Steuerungsdatei bezogen und mithilfe dieser XML-Steuerungsdatei in der ebenfalls bereits beschriebenen Weise eine gerätespezifische PS-Datei erzeugt und der Endverarbeitung durch den ausgewählten PS-Client zugeführt. Auch hierbei erfolgt die Umsetzung des Verarbeitungswunsches des Anwenders an dem ausgewählten PS-Client nach dem vorstehend beschriebenen "Best-Mode-Prinzip".

Darüber hinaus wird im Rahmen der Erfindung eine Vorrichtung zur Umsetzung des erfindungsgemäßen Verfahrens bereitgestellt, wiederum umfassend einen zentralen Server, mehrerer Arbeitsplatzrechner und mehrere PS-Clients, wobei auch hier zunächst die Eigenschaften der PS-Clients, insbesondere deren Funktionen und Anschlussdaten kontinuierlich über ein Geräteprotokoll abgefragt und in einer zentralen Gerätedatenbank abgelegt werden. Außerdem werden in einem vorbereitenden Schritt außerhalb des Netzwerks die Post-Script-Printer-Descriptions zumindest eines jeden der im Netzwerk befindlichen PS-Clients ausgewertet, insbesondere die Steuerungssequenzen der im Netzwerk befindlichen PS-Clients extrahiert und in korrespondierende XML-Dateien und weiter aufbereitet, d.h. insbesondere strukturiert und klassifiziert und als intelligente XML-Steuerungsdateien und in einer XML-Steuerungsdatenbank abgelegt, wobei erst unmittelbar vor Ausführung eines Druckauftrages aus der XML-Steuerungsdatenbank in Abhängigkeit vom Verarbeitungswunsch des Anwenders die dem Verarbeitungswunsch des Anwenders entsprechende XML-Steuerungsdatei bezogen und anschließend mithilfe dieser XML-Steuerungsdatei die bislang im System vorgehaltene geräteunspezifische PS-Datei in eine gerätespezifische PS-Datei zur Endverarbeitung umgesetzt wird.

In weiterer Ausgestaltung dieser Vorrichtung können die dezentralen XML-Steuerungsdatenbanken der erfindungsgemäßen Netzwerke mit einer zentralen XML-Steuerungsdatenbank datenverbunden sein, insbesondere synchronisiert sein, dass zumindest in einem Endstadium des Ausbaus der erfindungsgemäßen Vorrichtung alle XML-Steuerungsdateien aller oder zumindest weitgehend aller PS-Clients in den angeschlossenen Netzwerken bereitgestellt sind. In diesem Ausbaustadium kann im Weitern vollständig auf die aufwändige und umständliche Installation oder Administration von Druckertreibern verzichtet werden.

Die Erfindung wird nachstehend anhand eines in der Zeichnung dargestellten Ausführungsbeispiels näher erläutert.

Es zeigen:
- Figur 1: das erfindungsgemäße Verfahren und die erfindungsgemäße Vorrichtung zur Bearbeitung von PS-Dateien in einer Prinzipskizze und
- Figur 2: das erfindungsgemäße Verfahren in einem Ablaufdiagramm.

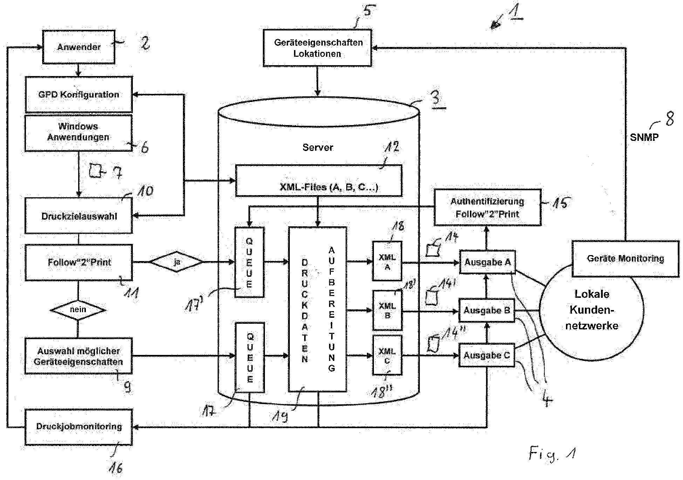

Figur 1 zeigt zunächst in einer Übersicht ein übliches Netzwerk 1 mit den in diesem Netzwerk 1 befindlichen Arbeitsplatzrechnern 2 sowie einem zentralen Server 3 und mehreren in diesem Netzwerk befindlichen PS-Clients 4, wobei es sich in diesem Ausführungsbeispiel vornehmlich um Drucker handelt. In einem ersten Arbeitsschritt werden gemäß dem erfindungsgemäßen Verfahren über ein geeignetes Geräteprotokoll, hier das SNMP-Protokoll 8, die Eigenschaften der in dem Netzwerk 1 befindlichen PS-Clients 4 und deren Anschlussdaten kontinuierlich vom Server 3 abgefragt und in einer zentralen Gerätedatenbank 5 abgelegt.

Wenn nun ein Anwender mittels seines Arbeitsplatzrechners 2, etwa im Rahmen einer Windows-Anwendung 6 eine Datei, im weiteren PS-Datei 7, erzeugt, werden dem Anwender aus der zentralen Gerätedatenbank 5 die aktuell im Netzwerk 1 befindlichen PS-Clients 4 in Verbindung mit deren Anschlussdaten zur Druckzielauswahl 10 angeboten. Im Weiteren wird dieser Verarbeitungswunsch als Zusatzdatei in Verbindung mit der weiter geräteunspezifischen PS-Datei 7, etwa in deren Header, in dem Netzwerk 1 vorgehalten. In einem weiteren Schritt kann der Anwender entscheiden, ob er seinen Verarbeitungswunsch, insbesondere einen Druckauftrag betreffend nach dem "Follow-to-print"-Verfahren umgesetzt wissen würde, wobei seine "Follow-to-print"-Entscheidung 11 als weitere Zusatzinformation in Verbindung mit der weiterhin geräteunspezifischen PS-Datei 7 im Netzwerk 1 vorgehalten wird.

Zusätzlich ist auf dem zentralen Server 3 eine XML-Steuerungsdatenbank 12 angelegt. Diese XML-Steuerungsdatenbank 12 wird in einer, in Figur 1 nicht dargestellten Weise, außerhalb des dargestellten Netzwerks 1 erzeugt, indem zumindest die Post-Script-Printer-Description, also die PPD-Datei, eines jeden im Netzwerk 1 befindlichen PS-Clients 4 ausgewertet wird und aus dieser die Steuerungssequenzen extrahiert und in eine gerätespezifische XML-Steuerungsdatei, umfassend sämtliche im Rahmen der Funktionalität eines jeden PS-Clients 4 erforderlichen Steuerungsbefehle überführt, wobei die Gesamtheit dieser XML-Steuerungsdateien in der XML-Steuerungsdatenbank 12 auf dem zentralen Server 3 abgelegt sind. Bei diesen XML-Steuerungsdateien 18, 18', 18" handelt es sich nicht einfach um transformierte Dateien, sondern vielmehr werden nach der Extraktion der Steuerungssequenzen aus der PPD-Datei diese strukturiert und klassifiziert in der jeweiligen XML-Steuerungsdatei 18, 18', 18" abgelegt. Hierdurch können die in der Zusatzinformation der geräteunspezifischen PS-Dateien 7 enthaltenen Vorgaben in der XML-Steuerungsdatei selbsttätig identifiziert und zur Erzeugung der etwa zu einem Ausdruck benötigten gerätespezifischen PS-Dateien 14, 14', 14" eingesetzt werden.

Wenn nun nach endgültiger Definition des Verarbeitungswunsches und der "Follow-to-print"-Entscheidung 11 des Anwenders die immer noch geräteunspezifische PS-Datei 7 vom Anwender zur Endverarbeitung freigegeben wird, überprüft der Server 3 zunächst die "Follow-to-print"-Entscheidung 11 des Anwenders. Hat der Anwender nicht das "Follow-to-print"-Verfahren ausgewählt, werden zusätzlich die Gerätefunktionen des ausgewählten PS-Clients 4 zur Auswahl angeboten. Nach der Auswahl der gewünschten Geräteeigenschaften 9 des PS-Clients 4 wird der Verarbeitungswunsch des Anwenders als Zusatzinformation mit der geräteunspezifischen PS-Datei 7 an den Server 3 übermittelt und in die Warteschlange 17 einsortiert.

Sobald die PS-Datei 7 zur Bearbeitung ansteht, wird aus der XML-Steuerungsdatenbank 12 die dem Verarbeitungswunsch des Anwenders entsprechende XML-Steuerungsdatei 18, 18', 18" aus der XML-Steuerungsdatenbank 12 bezogen und durch Aufbereitung der Druckdaten 19 aus der geräteunspezifischen PS-Datei 7 unter Verwendung der bereitgestellten XML-Steuerungsdateien 18, 18', 18" eine dem Verarbeitungswunsch des Anwenders entsprechende gerätespezifische PS-Datei 14, 14', 14" erzeugt.

Für den Fall, dass der Anwender im Rahmen seiner "Follow-to-print"-Entscheidung 11 das "Follow-to-print"-Verfahren ausgewählt hat, wird die gerätespezifische XML-Steuerungsdatei 18, 18', 18" erst bezogen, wenn aufgrund der Authentifizierung 15 durch den Anwender ein bestimmter PS-Client 4 ausgewählt wurde, so dass dann anhand von dieser Information aus der zentralen XML-Steuerungsdatenbank 12 unter Berücksichtigung des Verarbeitungswunsches 10 des Anwenders die korrespondierende XML-Steuerungsdatei 18, 18', 18" bereitgestellt werden kann. In diesem Fall wird dann unter Verwendung dieser Datei die bereits erwähnte gerätespezifische PS-Datei 14, 14', 14" erzeugt und an dem PS-Client 4 ausgedruckt, an dem sich der Anwender gemäß einem üblichen Legitimationsverfahren authentifiziert hat.

Der gesamte Ablauf der Umsetzung des Verarbeitungswunsches, also insbesondere der Abwicklung des Druckauftrages des Anwenders kann von dem Anwender an seinem Arbeitsplatzrechner 2 mittels eines üblichen Monitorings 16 überwacht werden.

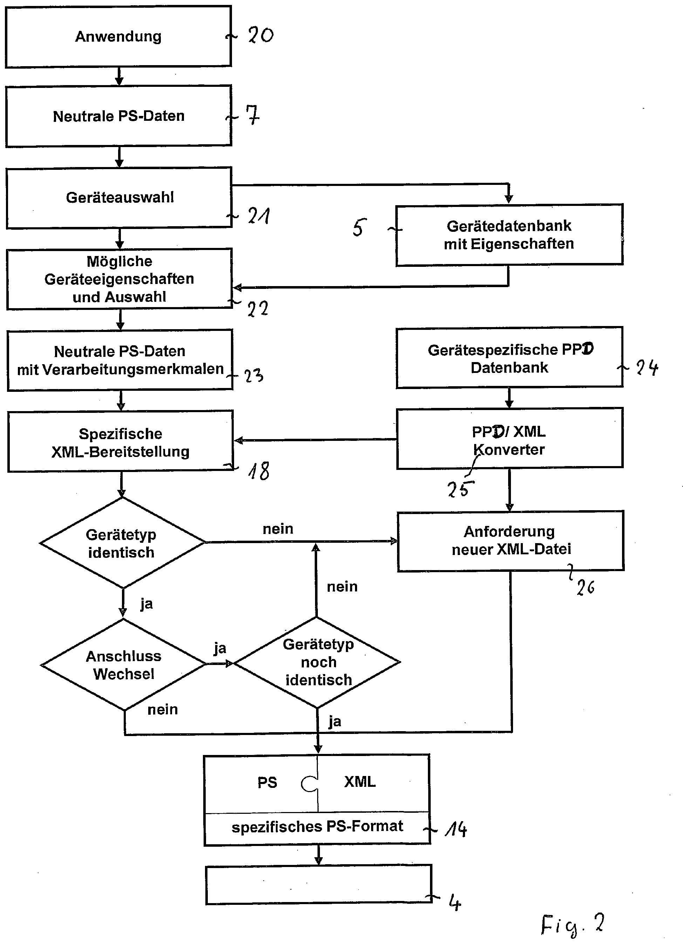

Ein möglicher Ablauf des erfindungsgemäßen Verfahrens ist in Figur 2 dargestellt.

Ausgangspunkt ist auch hier erneut, dass ein Anwender an seinem Arbeitsplatzrechner 2 eine Anwendung 20 startet und mit dieser Anwendung eine geräteunspezifische PS-Datei 7 erzeugt. Anschließend wird dem Anwender aus der zentralen Gerätedatenbank 5 eine Information über die im Netzwerk 1 befindlichen PS-Clients 4 und deren Funktionen und Anschlusssituation übermittelt und zur Geräteauswahl 21 angeboten. Sobald nun der Anwender anhand der ihm angebotenen Auswahl seinen Verarbeitungswunsch definiert hat, werden aus der zentralen Gerätedatenbank 5 die entsprechenden ausgewählten Gerätefunktionalitäten und Anschlussdaten, die aufgrund einer kontinuierlichen Aktualisierung der zentralen Gerätedatenbank 5 stets die aktuelle Situation widerspiegeln, an den Anwender übermittelt, wobei mit Hilfe dieser Geräteinformationen 22 des PS-Clients 4 in dem Netzwerk 1 an dem Arbeitsplatzrechner 2 der mittels einer Anwendung erzeugten geräteunspezifischen PS-Datei 7 eine Zusatzinformation beigefügt wird, so dass im Weiteren eine um den Verarbeitungswunsch des Anwenders ergänzte geräteunspezifische PS-Datei 23 im Netzwerk 1 bereitgestellt ist.

In einem weiteren externen Bearbeitungsschritt werden aus der Post-Script-Printer-Description, PPD, 24 zu jedem einzelnen im Netzwerk 1 befindlichen PS-Client 4, die diesen PS-Client 4 betreffenden XML-Steuerungssequenzen extrahiert und mittels eines Konverters in gerätespezifische intelligente XML-Steuerungsdateien 18, 18', 18" überführt, wobei die Gesamtheit der XML-Steuerungsdateien in der zentralen XML-Steuerungsdatenbank 12 im Netzwerk 1 vorgehalten werden.

Für den Fall, dass gemäß Figur 2 der vom Anwender im Rahmen seines Verarbeitungswunsches ausgewählten PS-Client 4 noch im Netzwerk 1 vorhanden ist und bezüglich dieses PS-Clients 4 auch kein Anschlusswechsel festgestellt werden kann, werden dann die dem Verarbeitungswunsch entsprechenden XML-Steuerungssequenzen als XML-Steuerungsdatei 18, 18', 18" aus der zentralen XML-Steuerungsdatenbank 12 bezogen und in einem weiteren Verarbeitungsschritt die bislang geräteunspezifische PS-Datei 7 unter Verwendung dieser Daten in eine gerätespezifische PS-Datei 14 überführt und zur Endverarbeitung an den im Netzwerk ausgewählten PS-Client 4 insbesondere zum Ausdruck übermittelt.

Wie ebenfalls aus Figur 2 ersichtlich werden in den Fällen, dass der nachgefragte PS-Client 4 in dem Netzwerk nicht mehr vorhanden ist, also ein Gerätewechsel vorgenommen wurde oder aber der PS-Client 4 nicht mehr an dem ausgewählten Anschluss vorhanden ist aus der zentralen XML-Steuerungsdatenbank 12 jeweils neue der veränderten Situation entsprechende XML-Steuerungsdateien 18, 18', 18" bezogen und dann unter Verwendung dieser aktualisierten XML-Steuerungsdatei 18, 18', 18" aus dem bis zu diesem Zeitpunkt noch geräteunspezifischen PS-Datei 7 eine gerätespezifische PS-Datei 14 erzeugt.

Im Falle der Auswahl eines "Follow-to-print"-Verfahrens, das in Figur 2 nicht dargestellt ist, wird die XML-Steuerungsdatei 18 erst bezogen, wenn durch Authentifizierung 15 des Anwenders an dem von ihm ausgewählten PS-Client 4 der PS-Client 4 feststeht und somit die diesem Gerät entsprechende XML-Steuerungsdatei 18 unter Berücksichtigung des ursprünglichen Verarbeitungswunsches des Anwenders bereitgestellt wird. Dabei wird in allen Fällen nach einem "Best-Mode"-Prinzip verfahren, d.h. der vom Anwender ausgewählte Druckauftrag wird unter Anwendung der dem letztlich ausgewählten PS-Client 4 entsprechenden optimalen Möglichkeiten ausgeführt, so dass sichergestellt ist, dass der Anwender auch im Rahmen eines "Follow-to-print"-Verfahrens, auch bei einem Anschlusswechsel des ausgewählten PS-Clients 4 oder bei einem vollständigen Austausch des PS-Clients 4 das jeweils seinem Verarbeitungswunsch entsprechende, im Rahmen der bestehenden Möglichkeiten bestmögliche Druckergebnis erhält. Dabei wird im Rahmen des vom Anwenders formulierten Verarbeitungswunsches die Druckzielauswahl 10, also die Wahl des Anschlussortes durch den Anwender, prioritätshöher behandelt als die vom Anwender getroffene Auswahl eines bestimmten PS-Clients 4, so dass im Falle eines Anschlusswechsels gleichwohl sichergestellt ist, dass dann der Druckauftrag an dem an dem vom Anwender ausgewählten Anschlussort nach dem "Best-mode"-Prinzip ausgedruckt wird.

Das vorstehend beschriebene Verfahren stellt also die jeweils bestmöglichen Druckergebnisse für den Anwender in einem Netzwerk 1 sicher, ohne dass sich der Anwender zu irgendeinem Zeitpunkt um die aktuelle Konfiguration des Netzwerks 1 kümmern muss. Auch im übrigen ist das Netzwerk 1 selbstpflegend und -lernend organisiert, d.h. die Gerätedatenbanken 5, 12 werden durch ständige Abfrageroutinen selbsttätig aktualisiert, so dass das Netzwerk 1 insgesamt bezüglich einer veränderten Situation hinsichtlich der im Netzwerk 1 befindlichen PS-Clients 4 ausgebildet ist und zu jedem Zeitpunkt die volle Funktionalität der PS-Clients 4 in dem Netzwerk 1 bereitgestellt ist. Darüber hinaus unterstützt das erfindungsgemäße Verfahren in optimaler Weise "Follow-to-print"-Aufträge und stellt auch in diesen Verfahren das jeweils bestmöglichste Druckergebnis für den Anwender sicher. Die bisher übliche umständliche Verwaltung von Druckertreibern sei es auf den im Netzwerk 1 befindlichen Arbeitsplatzrechnern 2 oder auf einer zentralen Datenbank kann im Rahmen des erfindungsgemäßen Verfahrens vollständig entfallen.

### BEZUGSZEICHENLISTE

- 1: Netzwerk
- 2: Arbeitsplatzrechner
- 3: Server
- 4: PS-Clients
- 5: Gerätedatenbank
- 6: Anwendung
- 7: PS-Datei
- 8: SNMP-Protokoll
- 9: Geräteeigenschaften
- 10: Druckzielauswahl
- 11: "Follow-to-print"-Entscheidung
- 12: XML-Steuerungsdatenbank
- 13: Druckdatenaufbereitung
- 14, 14', 14": gerätespezifische PS-Datei
- 15: Authentifizierung
- 16: Monitorring
- 17,17': Warteschlange
- 18, 18', 18": XML-Steuerungsdatei
- 19: Druckdaten
- 20: Anwendung
- 21: Geräteauswahl
- 22: Geräteinformation
- 23: PS-Datei mit Zusatzinformationen
- 24: PPD-Daten
- 25: Konverter
- 26: Anforderung neuer XML-Datei

## Patentansprüche

1. Verfahren zur Bearbeitung von Post-Script-Dateien, PS-Dateien (7), in einem Netzwerk (1) mit einem zentralen Server (3), mehreren Arbeitsplatzrechnern (2) und mehreren Post-Script-fähigen Netzwerkclients, PS-Clients (4), wobei die Geräteeigenschaften der PS-Clients (4), insbesondere betreffend die Gerätefunktionen und Anschlussdaten der PS-Clients (4), mittels des zentralen Servers (3) über ein Geräteprotokoll kontinuierlich abgefragt und in einer zentralen Gerätedatenbank (5) abgelegt werden, wobei sobald ein Anwender mittels eines Arbeitsplatzrechners (2) eine geräteunspezifische PS-Datei (7) erzeugt hat diesem Anwender auf Anfrage oder selbsttätig vom Server (3) unter Berücksichtigung der in der Gerätedatenbank (5) abgelegten Geräteeigenschaften, umfassend die Gerätefunktionen und Anschlussdaten der im Netzwerk (1) aktuell befindlichen PS-Clients (4), diese zur Auswahl angeboten werden und der Anwender im Weiteren in Abhängigkeit hiervon seinen Verarbeitungswunsch, wenigstens umfassend den ausgewählten PS-Client (4), definiert, wobei in einem vorbereitenden Schritt die Post-Script-Printer-Description, PPD, eines jeden PS-Clients (4) in dem Netzwerk (1) und/oder beliebiger PS-Clients (4) ausgewertet und in einem weiteren Bearbeitungsschritt mittels eines Interpreters die Steuerungssequenzen und Anschlussdaten eines jeden PS-Clients (4) aus den entsprechenden PPD-Dateien extrahiert und mittels eines Konverters in eine jeweils gerätespezifische XML-Datei, umfassend sämtliche im Rahmen der Funktionalität eines jeden PS-Clients (4) erforderlichen Steuerungsbefehle, transformiert werden und somit zu jedem PS-Client (4) in einer zusätzlichen XML-Steuerungsdatenbank (12) jeweils eine korrespondierende intelligente XML-Steuerungsdatei (18, 18', 18") auf dem Server (3) abgelegt wird, wobei die in Abhängigkeit von dem Verarbeitungswunsch des Anwenders erzeugte PS-Datei (7) mit einer Zusatzinformation betreffend diesen Verarbeitungswunsch versehen wird und im Weiteren die geräteunspezifische PS-Datei (7) in Verbindung mit dieser Zusatzinformation vorgehalten wird, wobei jeweils erst unmittelbar vor der Ausführung eines vom Anwender erteilten Druckauftrages die geräteunspezifische PS-Datei (7) mit der dem jeweiligen Verarbeitungswunsch des Anwenders entsprechenden intelligenten XML-Steuerungsdatei (18, 18', 18") zusammengeführt und unter Verwendung dieser Daten die geräteunspezifische PS-Datei (7) in eine gerätespezifische PS-Datei (14) umgesetzt wird, indem die in der Zusatzinformation der geräteunspezifischen PS-Datei (7) enthaltenen Vorgaben in der XML-Steuerungsdatei (18, 18', 18") selbsttätig identifiziert und zur Erzeugung der etwa zu einem Ausdruck benötigten gerätespezifischen PS-Datei (14, 14', 14") eingesetzt werden, und im Weiteren unter Verwendung der gerätespezifischen PS-Datei (14) die Endverarbeitung dieser gerätespezifischen PS-Datei (14) erfolgt.

2. Verfahren nach Anspruch 1, **dadurch gekennzeichnet, dass** zu jedem im Netzwerk (1) befindlichen PS-Client (4) nur einmal eine intelligente XML-Steuerungsdatei (18, 18', 18") erzeugt wird und in der XML-Steuerungsdatenbank (12) abgelegt wird.

3. Verfahren nach Anspruch 2, **dadurch gekennzeichnet, dass** die im Netzwerk (1) auf dem Server (3) abgelegte XML-Steuerungsdatenbank (12) mit einer zentralen übergeordneten Master-XML-Steuerungsdatenbank datenverbunden ist und mit dieser abgeglichen, insbesondere ergänzt wird.

4. Verfahren nach einem oder mehreren der vorhergehenden Ansprüche, **dadurch gekennzeichnet, dass** der Anwender in Verbindung mit seinem Verarbeitungswunsch zusätzlich auswählt, ob die vom Anwender erzeugte PS-Datei (7) nach dem "Follow-to-print"-Verfahren bearbeitet werden soll und im Weiteren diese Information als weitere Zusatzinformation in Verbindung mit dem Verarbeitungswunsch der geräteunspezifischen PS-Datei (7) beigefügt wird.

5. Verfahren nach einem oder mehreren der vorhergehenden Ansprüche, **dadurch gekennzeichnet, dass** in der weiteren Abarbeitung des Druckauftrages in Abhängigkeit von dem der geräteunspezifischen PS-Datei (14) beigefügten Verarbeitungswunsch die korrespondierende XML-Steuerungsdatei (18, 18', 18") in der XML-Steuerungsdatenbank (12) adressiert, im Netzwerk (1) bereitgestellt wird.

6. Verfahren nach Anspruch 5, **dadurch gekennzeichnet, dass** vor Ausführung des Druckauftrages mittels des Servers (3) selbsttätig in einer ersten Abfrage überprüft wird, ob der im Rahmen des Verarbeitungswunsches des Anwenders ausgewählte PS-Client (4) noch im Netzwerk (1) vorhanden ist und wenn ja, ob der ausgewählte PS-Client (4) auch noch dieselben Anschlussdaten besitzt, also noch am selben Anschluss angeschlossen ist, und in dem Fall, dass beide Rückfragen mit "Ja" beantwortet werden, unter Verwendung der im Netzwerk (1) bereitgestellten XML-Steuerungsdatei (18, 18', 18") die geräteunspezifische PS-Datei (7) in eine gerätespezifische PS-Datei (14) überführt wird und dem ausgewählten PS-Client (4) zur Endverarbeitung übermittelt, d.h. insbesondere ausgedruckt, wird.

7. Verfahren nach Anspruch 6, **dadurch gekennzeichnet, dass** für den Fall, dass die erste Abfrage ergibt, dass an dem von dem Anwender ausgewählten Anschluss ein anderer PS-Client (4) angeschlossen ist, die diesem neuen PS-Client (4) entsprechende XML-Steuerungsdatei (18,18',18") in der XML-Steuerungsdatenbank (12) adressiert und im Netzwerk (1) bereitgestellt und anschließend mithilfe der neuen XML-Steuerungsdatei (18, 18', 18") die geräteunspezifische PS-Datei (7) in eine gerätespezifische PS-Datei (14) überführt und dem anderen PS-Client (4) zur Endverarbeitung übermittelt, d.h. insbesondere ausgedruckt, wird.

8. Verfahren nach Anspruch 6 oder 7, **dadurch gekennzeichnet, dass** für den Fall, dass an dem im Rahmen des Verarbeitungswunsches des Anwenders ausgewählten Anschluss inzwischen ein anderer PS-Client (4) angeschlossen ist, die dem anderen PS-Client (4) entsprechende XML-Steuerungsdatei (18,18',18") in der XML-Steuerungsdatenbank (12) adressiert und im Netzwerk nach dem Best-Mode-Prinzip bereitgestellt wird und dementsprechend eine dem Verarbeitungswunsch des Anwenders unter Berücksichtigung der Gerätefunktionalitäten des anderen PS-Clients (4) optimierte XML-Steuerungsdatei (18, 18', 18") bereitgestellt wird und im Weiteren unter Verwendung dieser XML-Steuerungsdatei (18, 18', 18") die geräteunspezifische PS-Datei (7) in eine gerätespezifische PS-Datei (14) überführt wird und dem ausgewählten anderen PS-Client (4) zur Endverarbeitung übermittelt, d.h. insbesondere ausgedruckt, wird.

9. Verfahren nach einem oder mehreren der vorhergehenden Ansprüche 6 bis 8, **dadurch gekennzeichnet, dass** für den Fall, dass das im Rahmen des Verarbeitungswunsches des Anwenders ausgewählte PS-Client (4) an einem anderen Anschluss im Netzwerk (1) vorhanden ist, dem Anwender dieses Gerät in Verbindung mit den aktualisierten Anschlussdaten mittels des Servers (3) zur Korrektur seines bisherigen Verarbeitungswunsches angeboten wird und für den Fall, dass der Anwender erneut diesen PS-Client (4) auswählt, die veränderten Anschlussdaten bezogen und die Zusatzinformation der geräteunspezifischen PS-Datei (7) entsprechend geändert wird und anschließend mithilfe der unveränderten XML-Steuerungsdatei (18, 18', 18") die geräteunspezifische PS-Datei (7) in eine gerätespezifische PS-Datei (14) überführt und dem ausgewählten PS-Client (4) zur Verarbeitung übermittelt, d.h. insbesondere ausgedruckt, wird.

10. Verfahren nach einem oder mehreren der vorhergehenden Ansprüche 6 bis 9, **dadurch gekennzeichnet, dass** für den Fall, dass der Anwender im Rahmen seines Verarbeitungswunsches das "Follow-to-Print-Verfahren" ausgewählt hat, die dem Verarbeitungswunsch entsprechende XML-Steuerungsdatei (18, 18', 18") erst zum Zeitpunkt des Abrufs des Druckauftrags durch den Anwender an einem beliebigen PS-Client (4) im Netzwerk (1) nach dem "Best- Mode-Prinzip" bereitgestellt wird und mittels dieser bereitgestellten XML-Steuerungsdatei (18, 18', 18"), die geräteunspezifische PS-Datei (7) in eine gerätespezifische PS-Datei (14) überführt und dem ausgewählten PS-Client (4) zur Endverarbeitung übermittelt, d.h. insbesondere ausgedruckt, wird.

11. Vorrichtung zur Durchführung eines Verfahrens gemäß den vorhergehenden Ansprüchen 1 bis 10, bei dem in einem Netzwerk (1) mit einem zentralen Server (3), mehreren Arbeitsplatzrechnern (2) und mehreren Post-Script-fähigen Netzwerkclients, PS-Clients (4), die Geräteeigenschaften, umfassend die Gerätefunktionen und Anschlussdaten der PS-Clients (4) in dem Netzwerk (1), über ein Geräteprotokoll kontinuierlich abfragbar und in einer zentralen Gerätedatenbank (5) ablegbar sind, wobei dem Anwender nach Erzeugung einer geräteunspezifischen Post-Script-Datei, PS-Datei (7), mittels seines Arbeitsplatzrechners (2) auf dessen Anfrage oder selbsttätig mittels des Servers (3) die Funktionen und Anschlussdaten der aktuell im Netzwerk (1) befindlichen PS-Clients (4) zur Auswahl anbietbar sind und der Anwender in Abhängigkeit von diesen Daten seinen Verarbeitungswunsch definiert und im Weiteren die geräteunspezifische PS-Datei (7) mit dieser Zusatzinformation, etwa in einem Header der PS-Datei (7), in dem Netzwerk (1) vorgehalten wird, wobei zu jedem PS-Client (4) in dem Netzwerk (1) und/oder zu beliebig vielen PS-Clients die jeweils korrespondierende PostScript-Printer-Description, PPD, ausgewertet und mittels eines Interpreters für jeden PS-Client (4) aus der entsprechenden PPD-Datei die Steuerungssequenzen und Anschlussdaten dieses PS-Clients (4) extrahiert, anschließend strukturiert und klassifiziert mittels eines Konverters (25) in eine korrespondierende intelligente XML-Steuerungsdatei, umfassend sämtliche im Rahmen der Funktionalität eines jeden PS-Clients (4) erforderlichen Steuerungsbefehle, umsetzbar ist und diese XML-Steuerungsdateien (18,18',18") in einer XML-Steuerungsdatenbank (12) bereitgestellt sind und im weiteren erst unmittelbar vor Ausführung eines Druckauftrages die geräteunabhängige PS-Datei (7) unter Berücksichtigung des Verarbeitungswunsches des Anwenders mit der korrespondierenden XML-Steuerungsdatei (18, 18', 18") zusammengeführt wird, indem die in der Zusatzinformation der geräteunspezifischen PS-Datei (7) enthaltenen Vorgaben in der XML-Steuerungsdatei (18, 18', 18") selbsttätig identifiziert und zur Erzeugung der etwa zu einem Ausdruck benötigten gerätespezifischen PS-Datei (14, 14', 14") eingesetzt werden, und in eine gerätespezifische PS-Datei (14) zur Endverarbeitung, insbesondere zur Ausführung eines Druckauftrages, umsetzbar ist.

12. Vorrichtung nach Anspruch 11, **dadurch gekennzeichnet, dass** die dezentrale XML-Steuerungsdatenbank (12) mit einer zentralen Master-XML-Steuerungsdatenbank datenverbunden ist, wobei in der zentralen XML-Steuerungsdatenbank alle XML-Steuerungsdateien (18,18',18") aller bekannten PS-Clients (4) abgelegt und diese Master-XML-Steuerungsdatenbank ständig ergänzt wird und wobei die angeschlossenen dezentralen XML-Steuerungsdatenbanken (12) mit dieser Master-XML-Steuerungsdatenbank synchronisierbar sind.

## Claims

1. A method for processing post-script files, PS files (7), in a network (1) with a central server (3), a plurality of workstation computers (2), and a plurality of post-script-capable network clients, PS clients (4), wherein the device properties of the PS clients (4), in particular regarding the device functions and connection data of the PS clients (4), are continuously interrogated by means of the central server (3) via a device protocol and stored in a central device database (5), wherein, once a user has generated a PS file (7) non-specific to a device by means of a workstation computer (2), said user, following a query or automatically by the server (3) by considering the device properties stored in the device database (5), comprising the device functions and connection data of the PS clients (4) currently disposed in the network (1), the latter are offered for selection, and the user subsequently, as a function of this, defines his or her processing request, which at least comprises the selected PS client (4), wherein, in a preparatory step, the post-script printer description, PPD, of each PS client (4) in the network (1) and/or any PS client (4) are evaluated and, in a further processing step, the control sequences and connection data of each PS client (4) are extracted from the corresponding PPD files by means of an interpreter, and converted by means of a converter into a respective device-specific XML file comprising all control commands in the context of the functionality of each PS client (4), and thus a corresponding intelligent XML control file (18, 18', 18") is stored with respect to each PS client (4) on the server (3) in an additional XML control database (12), wherein the PS file (7) generated as a function of the processing request of the user is provided with additional information concerning this processing request, and furthermore the device-non-specific PS file (7) is retained in conjunction with said additional information, wherein the device-non-specific PS file (7) with the intelligent XML control file (18, 18', 18") corresponding to the respective processing request of the user is merged only directly before the execution of a print order initiated by the user, and the device-non-specific PS file (7) is converted into a device-specific PS file (14) by using said data, in that requirements contained in the additional information of the device-non-specific PS file (7) are automatically identified in the XML control file (18, 18', 18") and used to generate the device-specific PS file (14, 14', 14") required for a printout, and the final processing of this device-specific PS file (14) further takes place by using the device-specific PS file (14).

2. A method according to claim 1, **characterized in that** an intelligent XML control file (18, 18', 18") is generated only once for each PS client (4) located in the network (1) and is stored in the XML control database (12).

3. A method according to claim 2, **characterized in that** the XML control database (12) stored in the network (1) on the server (3) is data-connected to a central higher-level master XML control database and is matched, in particular supplemented, therewith.

4. A method according to one or more of the preceding claims, **characterized in that** the user additionally selects, in conjunction with his or her processing request, whether the PS file (7) generated by the user is to be processed by the "follow-to-print" method and whether furthermore this information is added as further additional information in connection with the processing request of the device-non-specific PS file (7).

5. A method according to one or more of the preceding claims, **characterized in that**, in the further processing of the print job and depending on the processing request attached to the device-non-specific PS file (14), the corresponding XML control file (18, 18', 18"), which is addressed in the XML control database (12), is provided in the network (1).

6. A method according to claim 5, **characterized in that** prior to the execution of the print order by means of the server (3) it is automatically checked in a first query whether the PS client (4) selected in the context of the processing request of the user is still present in the network (1), and if so, whether the selected PS client (4) also has the same connection data, i.e. it is still connected to the same connection, and in the event that both queries are answered with "Yes", the device-non-specific PS file (7) is transferred into a device-specific PS file (14) by using the provided XML control file (18, 18', 18") provided in the network (1), and is sent to the selected PS client (4) for final processing, i.e. especially printed out.

7. A method according to claim 6, **characterized in that**, in the event that the first query shows that a different PS client (4) is connected to the port selected by the user, the XML control file (18, 18', 18") corresponding to this new PS client (4) is addressed in the XML control database (12) and provided in the network (1), and the device-non-specific PS file (7) is subsequently transferred into a device-specific PS file (14) by means of the new XML control file (18, 18', 18") and transmitted to the other PS client (4) for final processing, i.e. especially printed out.

8. A method according to claim 6 or 7, **characterized in that**, in the event that another PS client (4) is connected in the meantime to the port selected in the context of the processing request of the user, the XML control file (18, 18', 18") corresponding to the other PS client (4) is addressed in the XML control database (12) and is provided in the network according to the best-mode principle and accordingly an XML control file (18, 18', 18") is made available which is optimised to the processing request of the user by taking into account the device functionalities of the other PS client (4), and furthermore the device-non-specific PS file (7) is transferred into a device-specific PS file (14) by using said XML control file (18, 18', 18") and is transmitted to the selected other PS client (4) for final processing, i.e. especially printed out.

9. A method according to one or more of the preceding claims 6 to 8, **characterized in that** if the PS client (4), which is selected in the context of the processing request of the user, is present at another connection in the network (1), this device is offered to the user in conjunction with the updated connection data by means of the server (3) for correction of his or her former processing request, and if the user again selects this PS client (4), the modified connection data is received and the additional information of the device-non-specific PS file (7) is accordingly amended and subsequently the device-non-specific PS file (7) is transferred into a device-specific PS file (14) by means of the unchanged XML control file (18, 18', 18") and transmitted to the selected PS client (4) for processing, i.e. especially printed out.

10. A method according to one or more of the preceding claims 6 to 9, **characterized in that** if the user has selected the "follow-to-print method" within the scope of his or her processing request, the XML control file (18, 18', 18") corresponding to the processing request is provided on the basis of the"best-mode principle" on an arbitrary PS client (4) in the network (1) only at the time of the print job being requested by the user, and the device-non-specific PS file (7) is transferred into a device-specific PS file (14) by means of this provided XML control file (18, 18', 18") and transmitted to the selected PS client (4) for final processing, i.e. especially printed out.

11. A device for carrying out a method according to the preceding claims 1 to 10, wherein, in a network (1) with a central server (3), a plurality of workstation computers (2), and a plurality of network clients with post-script capability, PS clients (4) having device properties comprising the device functions and connection data of the PS clients (4) in the network (1) can be interrogated continuously via a device protocol and can be stored in a central device database (5), wherein the user can be offered the functions and connection data of the PS clients (4) currently disposed in the network (1) for selection after generating a device-non-specific post-script file, PS file (7), by means of the workstation computer (2) up its interrogation or automatically by means of the server (3), and the user defines his or her processing request depending on said data, and furthermore the device-non-specific PS file (7) with this additional information, for example in a header of the PS file (7), is maintained in the network (1), wherein the respectively corresponding PostScript printer description, PPD, is evaluated for each PS client (4) in the network (1) and/or for an arbitrary number of PS clients, and the control sequences and connection data of this PS client (4) are extracted by means of an interpreter for each PS client (4), and can then be implemented in a structured and classified manner by means of a converter (25) into a corresponding intelligent XML control file, comprising all control commands required within the scope of the functionality of each PS client (4), and said XML control files (18, 18', 18") are provided in an XML control database (12) and, in the following, the device-independent PS file (7) is merged with the corresponding XML control file (18, 18', 18") by considering the processing request of the user only immediately before the execution of a print job, in that the requirements contained in the additional information of the device-non-specific PS file (7) are identified automatically in the XML control file (18, 18', 18") and are used for generating the device-specific PS file (14, 14', 14") required for the printout for example, and can be converted into a device-specific PS file (14) for final processing, in particular for executing a print job.

12. A device according to claim 11, **characterized in that** the decentralised XML control database (12) is data-connected to a central master XML control database, wherein all XML control files (18, 18', 18") of all known PS clients (4) are stored in the central XML control database and this master XML control database is constantly updated, and wherein the connected decentralised XML control databases (12) can be synchronised with this master XML control database.

## Revendications

1. Procédé pour le traitement de fichiers PostScript ou fichiers PS (7) dans un réseau (1) avec un serveur central (3), plusieurs ordinateurs de poste de travail (2) et plusieurs clients de réseau compatibles PostScript ou clients PS (4), dans lequel les propriétés d'appareil du client PS (4), concernant en particulier les fonctions d'appareil et les données de connexion des clients PS (4), sont consultées de façon continue au moyen du serveur central (3) à l'aide d'un protocole d'appareil et enregistrées dans une base de données d'appareils centrale (5), dans lequel, dès qu'un utilisateur a créé au moyen d'un ordinateur de poste de travail (2) un fichier PS non spécifique d'un appareil (7), le serveur (3), en tenant compte des propriétés d'appareil enregistrées dans la base de données d'appareils (5) et comprenant les fonctions d'appareil et données de connexion des clients PS (4) se trouvant actuellement dans le réseau (1), les propose à cet utilisateur, sur demande ou automatiquement, et l'utilisateur définit en outre en fonction de cela sa demande de traitement, qui inclut au moins le client PS (4) choisi, dans lequel, dans une étape préparatoire, la définition d'imprimante PostScript PPD de chaque client PS (4) dans le réseau (1) et/ou de certains clients PS (4) est analysée et les séquences de commande et données de connexion de chaque client PS (4) sont extraites des fichiers PPD correspondants dans une autre étape de traitement au moyen d'un interprète et transformées au moyen d'un convertisseur en un fichier XML spécifique de chaque appareil, comprenant tous les ordres de commande nécessaires pour le fonctionnement de chaque client PS (4), et un fichier de commande XML intelligent (18, 18', 18") correspondant est enregistré sur le serveur (3) pour chaque client PS (4) dans une base de données de commande XML (12) supplémentaire, le fichier PS (7) créé en fonction de la demande de traitement de l'utilisateur étant muni d'une information supplémentaire concernant cette demande de traitement et le fichier PS non spécifique d'un appareil (7) étant en outre présenté en relation avec cette information supplémentaire,- le fichier PS non spécifique d'un appareil (7) n'étant réuni qu'immédiatement avant l'exécution d'un ordre d'impression donné par l'utilisateur avec le fichier de commande XML intelligent (18, 18', 18") correspondant à la demande de traitement de l'utilisateur et le fichier PS non spécifique d'un appareil (7) étant transformé en un fichier PS spécifique d'un appareil (14) en utilisant ces données par le fait que les consignes du fichier de commande XML intelligent (18, 18', 18") contenues dans l'information complémentaire du fichier PS non spécifique d'un appareil (7) sont identifiées automatiquement et utilisées pour créer le fichier PS spécifique d'un appareil (14, 14', 14") nécessaire, par exemple, pour l'impression, et le traitement final du fichier PS spécifique d'un appareil (14) est exécuté pour le reste en utilisant ce fichier PS spécifique d'un appareil (14).

2. Procédé selon la revendication 1, **caractérisé en ce qu'**un fichier de commande XML intelligent (18, 18', 18") n'est créé et enregistré dans la base de données de commande XML (12) qu'une fois pour chaque client PS (4) dans le réseau (1).

3. Procédé selon la revendication 2, **caractérisé en ce que** la base de données de commande XML (12) enregistrée dans le réseau (1) sur le serveur (3) est en liaison de données avec une base de données de commande XML maître centrale de niveau supérieur et comparée avec celle-ci, en particulier complétée.

4. Procédé selon une ou plusieurs des revendications précédentes, **caractérisé en ce que** l'utilisateur choisit en outre, en relation avec sa demande de traitement, si le fichier PS (7) qu'il a créé doit être traité selon le procédé *« follow-to-print »* et si ces informations sont jointes comme autre information supplémentaire en relation avec la demande de traitement du fichier PS non spécifique d'un appareil (7).

5. Procédé selon une ou plusieurs des revendications précédentes, **caractérisé en ce que** pendant la suite du traitement de l'ordre d'impression en fonction de la demande de traitement jointe au fichier PS non spécifique d'un appareil (14), le fichier de commande XML (18, 18', 18") correspondant est adressé dans la base de données de commande XML (12) et mis à disposition dans le réseau (1).

6. Procédé selon la revendication 5, **caractérisé en ce qu'**avant l'exécution de l'ordre d'impression, le serveur (3) vérifie automatiquement, dans une première interrogation, si le client PS (4) sélectionné dans la demande de traitement de l'utilisateur est encore présent dans le réseau (1) et si oui, si le client PS (4) choisi possède encore les mêmes données de connexion, c'est-à-dire s'il est encore connecté sur la même connexion, et si la réponse aux deux interrogations est « oui », le fichier PS non spécifique d'un appareil (7) est transformé en fichier PS spécifique d'un appareil (14) en utilisant le fichier de commande XML (18, 18', 18") mis à disposition dans le réseau (1) et transmis au client PS (4) choisi en vue du traitement final, c'est-à-dire, en particulier de l'impression.

7. Procédé selon la revendication 6, **caractérisé en ce que** dans le cas où le résultat de la première interrogation est qu'un autre client PS (4) est connecté sur la connexion choisie par le client, le fichier de commande XML (18, 18',18") correspondant à ce nouveau client PS (4) est adressé dans la base de données de commande XML (12) et mis à disposition dans le réseau (1) puis, à l'aide du nouveau fichier de commande XML (18, 18', 18"), le fichier PS non spécifique d'un appareil (7) est transformé en fichier PS spécifique d'un appareil (14) et transmis à l'autre client PS (4) en vue du traitement final, c'est-à-dire, en particulier, imprimé.

8. Procédé selon la revendication 6 ou 7, **caractérisé en ce que** dans le cas où un autre client PS (4) est connecté entre-temps sur la connexion choisie dans le cadre de la demande de traitement de l'utilisateur, le fichier de commande XML(18, 18', 18") correspondant à l'autre client PS (4) est adressé dans la base de données de commande XML (12) et mis à disposition dans le réseau selon le principe « *best mode »* et un fichier de commande XML (18,18', 18") correspondant optimisé selon la demande de traitement de l'utilisateur, en tenant compte des fonctionnalités d'appareil de l'autre client PS (4), est mis à disposition et, à l'aide de ce fichier de commande XML (18, 18', 18"), le fichier PS non spécifique d'un appareil (7) est transformé en fichier PS spécifique d'un appareil (14) et transmis à l'autre client PS (4) choisi en vue du traitement final, c'est-à-dire, en particulier, imprimé.

9. Procédé selon une ou plusieurs des revendications 6 à 8, **caractérisé en ce que** dans le cas où le client PS (4) choisi dans le cadre de la demande de traitement de l'utilisateur est connecté sur une autre connexion dans le réseau (1), cet appareil est proposé à l'utilisateur en relation avec les données de connexion actualisées au moyen du serveur (3) pour qu'il corrige sa demande de traitement et dans le cas où l'utilisateur choisit à nouveau ce client PS (4), les données de connexion modifiées sont obtenues et l'information supplémentaire du fichier PS non spécifique d'un appareil (7) modifiée en conséquence puis, à l'aide du fichier de commande XML (18, 18', 18") non modifié, le fichier PS non spécifique d'un appareil (7) est transformé en fichier PS spécifique d'un appareil (14) et transmis au client PS (4) choisi en vue du traitement final, c'est-à-dire, en particulier, imprimé.

10. Procédé selon une ou plusieurs des revendications 6 à 9, **caractérisé en ce que** dans le cas où l'utilisateur choisit, dans sa demande de traitement, la procédure *« follow to print »,* le fichier de commande XML (18, 18', 18") correspondant à la demande de traitement n'est mis à disposition qu'au moment où l'utilisateur donne l'ordre d'impression sur un quelconque client PS (4) dans le réseau (1) selon le principe « *best mode* » et, au moyen de ce fichier de commande XML (18, 18', 18") mis à disposition, le fichier PS non spécifique d'un appareil (7) est transformé en fichier PS spécifique d'un appareil (14) et transmis au client PS (4) choisi en vue du traitement final, c'est-à-dire, en particulier, imprimé.

11. Dispositif pour la mise en oeuvre d'un procédé selon les revendications 1 à 10 dans lequel, dans un réseau (1) comprenant un serveur central (3), plusieurs ordinateurs de poste de travail (2) et plusieurs clients réseaux compatibles PostScript ou clients PS (4), les propriétés d'appareil comprenant les fonctions d'appareil et les données de connexion des clients PS (4) dans le réseau (1) peuvent être consultées de façon continue à l'aide d'un protocole d'appareil et enregistrées dans une base de données d'appareil centrale (5), dans lequel, après la création d'un fichier PostScript ou fichier PS non spécifique d'un appareil (7) au moyen d'un ordinateur de poste de travail (2), à la demande de l'utilisateur ou automatiquement, les fonctions et données de connexion du client PS (4) se trouvant actuellement dans le réseau (1) peuvent être proposées au moyen du serveur (3) à l'utilisateur pour sélection et ce dernier définit sa demande de traitement en fonction de ces données, le fichier PS non spécifique d'un appareil (7) contenant cette information supplémentaire étant en outre présenté dans le réseau (1), par exemple dans un en-tête du fichier PS (7), la définition d'imprimante PostScript PPD de chaque client PS (4) dans le réseau (1) et/ou d'un nombre quelconque de clients PS étant analysée et les séquences de commande et données de connexion de ce client PS (4) étant extraites pour chaque client PS (4) du fichier PPD correspondant au moyen d'un interprète puis structurées et classifiées au moyen d'un convertisseur (25) en un fichier de commande XML intelligent correspondant, comprenant tous les ordres de commande nécessaires pour le fonctionnement de chaque client PS (4), et ces fichiers de commande XML (18, 18', 18") étant mis à disposition dans une base de données de commande XML (12), et le fichier PS non spécifique d'un appareil (7) n'étant réuni qu'immédiatement avant l'exécution d'un ordre d'impression avec le fichier de commande XML (18, 18', 18") correspondant en tenant compte de la demande de traitement de l'utilisateur, par le fait que les consignes du fichier de commande XML (18, 18', 18") contenues dans l'information complémentaire du fichier PS non spécifique d'un appareil (7) sont identifiées automatiquement et utilisées pour créer le fichier PS spécifique d'un appareil (14, 14', 14") nécessaire, par exemple, pour l'impression et peut être transformé en un fichier PS spécifique d'un appareil (14) en vue du traitement final, en particulier pour l'exécution d'un ordre d'impression.

12. Dispositif selon la revendication 11, **caractérisé en ce que** la base de données de commande XML (12) décentralisée est en liaison de données avec une base de données de commande XML maître centrale dans laquelle tous les fichiers de commande XML (18, 18', 18") de tous les clients PS (4) connus sont enregistrés et cette base de données de commande XML maître est complétée en permanence, et dans lequel les bases de données de commande XML (12) décentralisées connectées peuvent être synchronisées avec cette base de données de commande XML maître.
